# EUROPEAN PATENT SPECIFICATION

(11) **EP 4 625 653 B1**
(45) Date of publication and mention of the grant of the patent: **25.02.2026**
(21) Application number: 24217346.6
(22) Date of filing: 04.12.2024
(51) Int. Cl.: H01M 50/213, H01M 50/242, H01M 50/244, H01M 50/262, H01M 50/271, H01M 50/293, H01M 50/30, H01M 50/474, H01M 50/486

(54) **COVER STRUCTURE AND BATTERY PACK**
ABDECKUNGSSTRUKTUR UND BATTERIEPACK
STRUCTURE DE COUVERCLE ET BLOC-BATTERIE

(30) Priority: 30.03.2024 CN 202420653734 U
(43) Date of publication of application: 01.10.2025
(73) Proprietor: Eve Energy Co., Ltd., Huizhou, Guangdong 516006 (CN)
(72) Inventor: LIU, Xiangsheng, Huizhou, Guangdong 516006 (CN); QIU, Wencong, Huizhou, Guangdong 516006 (CN)
(74) Representative: Herrero & Asociados, S.L.

(56) References cited:
- EP-A1- 4 216 350
- EP-A1- 4 274 014
- CN-A- 117 352 938
- CN-U- 219 017 854
- US-A1- 2013 244 089

## Description

### TECHNICAL FIELD

The present disclosure relates to the technology field of batteries, and in particular, to a cover structure and a battery pack.

### BACKGROUND

Batteries are usually packaged into a battery pack by means of encapsulating foaming technology, which can prevent batteries from being affected by dust, temperature and humidity; reduce the risk of the batteries being affected by moisture, corrosion and short circuit; dissipate internal heat of the batteries to improve the safety of the battery; and help in shock absorption and prolong the service life of the batteries.

In related technologies, for fully encapsulated foaming battery packs, there are usually many bubbles left on an inner side of a box cover during a foaming process that cannot be discharged, which can easily form vacuolar zones in the region where the bubbles are left. The vacuolar zones may directly affect the adhesive performance of the box cover, leading to a reduction in the overall strength of the battery pack.

US20130244089A1 discloses a secondary battery device that includes a secondary battery cell, a case configured to accommodate the secondary battery cell, and foam coating layers sandwiched between an outer surface of the secondary battery cell and an inner surface of the case and configured to hold the secondary battery cell.

EP4216350A1 discloses a battery module that includes a cell assembly including a plurality of battery cells, and a module housing having an arrangement space for accommodating the cell assembly and a cover plate covering a top surface of the cell assembly. The cover plate has at least one discharge hole for discharging gas generated in the cell assembly. A blocking member is disposed between the top surface of the cell assembly and the cover plate to block flame or a combustion material from being discharged externally of the module housing through the discharge hole. A battery pack includes the battery module may include a pack case including a cover case, a bottom case and a venting unit.

EP4274014A1 discloses a battery module including a cell assembly including one or more battery cells, a module case having an inner space in which the cell assembly is accommodated, and an expansion member located in the module case, and configured to fill at least a part of an empty space in the module case by being expanded in volume when heat is supplied.

CN117352938A discloses a battery module, a battery pack, and an electrical device. The battery module includes: a battery box, including a box structure and a module bottom cover, the box structure is connected to the module bottom cover, and the module bottom cover is configured with a pressure relief channel; several battery cells arranged along the second direction to form a battery cell group, and the outer edge of the battery cell group being enclosed with the battery box to form a sealing area; and a sealing component configured in the sealing area and corresponding to the pole ear of the battery cell, so that when the battery cell experiences thermal runaway, it will erupt along the pressure relief channel.

CN219017854U discloses a battery box, a battery pack, and an electric vehicle with explosion-proof function. The battery box includes a box assembly and insulation components. The box assembly has a box shell and an explosion-proof valve. The box shell is provided with an exhaust hole, and the explosion-proof valve is set at the exhaust hole of the box shell. The insulation component is set on the inner side of the box shell and at least surrounds the exhaust hole. The insulation component is equipped with a ventilation part for guiding the gas inside the box shell to act on the explosion-proof valve.

### SUMMARY

According to the present disclosure, it is provided a battery pack according to the attached claims.

The beneficial effects of the battery pack provided in the present disclosure are as follows. The cover structure of the present disclosure includes a substrate and an exhaust portion. The substrate is configured to cover the box. The substrate and the box together form the accommodating cavity, and the accommodating cavity is configured to accommodate the plurality of cells and the foam adhesive arranged along the plurality of adhesive injection tracks. The exhaust portion is provided on the middle portion of the substrate. The exhaust portion is provided with the plurality of exhaust holes, and the area between two adjacent adhesive injection tracks is set to correspond to at least one exhaust hole, so as to discharge gas timely during the fully encapsulating and foaming process of the battery pack, thereby preventing bubbles from remaining in the cover structure. Specifically, when fully encapsulating and foaming are performed, the foam adhesive merges towards the middle area between the two adjacent adhesive injection tracks from the two adjacent adhesive injection tracks, and bubbles generated in the box during a foaming process are gradually squeezed towards the middle area, and then can be effectively discharged through the exhaust holes corresponding to the area between the two adjacent adhesive injection tracks, so as to avoid vacuoles caused by foaming, and improve the adhesive performance of the cover structure and the overall strength of the foam adhesive, thereby enhancing the overall strength of the battery pack.

### BRIEF DESCRIPTION OF THE DRAWINGS

FIG. 1 is a top perspective schematic diagram of a battery pack according to some embodiments.
FIG. 2 is a structural schematic diagram of a cover structure viewed from a first perspective according to some embodiments.
FIG. 3 is a structural schematic diagram of a cover structure viewed from a second perspective according to some embodiments.
FIG. 4 is a schematic diagram of the structure at region A as shown in FIG. 3.
FIG. 5 is a structural schematic diagram of another cover structure according to some embodiments.
FIG. 6 is a top perspective schematic diagram of another battrey pack according to some embodiments.

### Reference numerals in the drawings:

1, battery pack; 10, cover structure; 100, substrate; 200, exhaust portion; 210, exhaust region; 212, exhaust hole; 213, second marking line; 300, fixing portion; 310, fixing hole; 400, cell; 500, adhesive injection track; 600, box; 61, accommodating cavity; 611, accommodating region; 601, first marking line; X, central axis.

### DETAILED DESCRIPTION

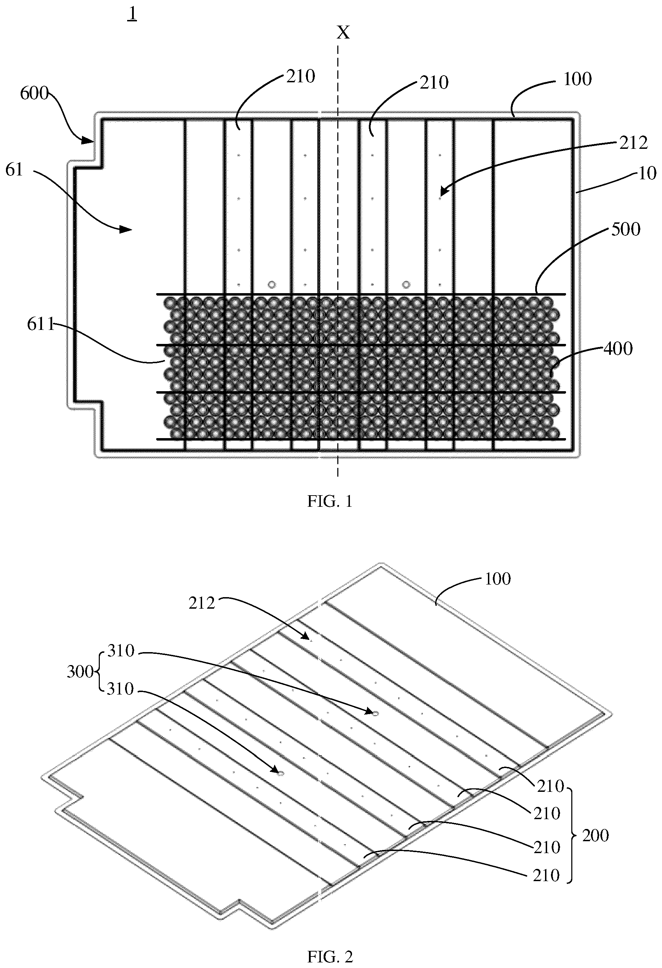

In some embodiments, as shown in FIG. 1 and FIG. 2, a cover structure 10 and a battery pack 1 employing the cover structure 10 are provided. The battery pack 1 further includes a plurality of cells 400 and a box 600. The cover structure 10 covers the box 600, and forms an accommodating cavity 61 together with the box 600. Specifically, the cover structure 10 includes a substrate 100 and an exhaust portion 200. The substrate 100 is configured to cover the box 600, and form the accommodating cavity 61 together with the box 600. The box 600 is preset with a plurality of adhesive injection tracks 500 in an bottom of the accommodating cavity 61. The accommodating cavity 61 is configured to accommodate the plurality of cells 400 and foam adhesive arranged along the plurality of adhesive injection tracks 500. The exhaust portion 200 is provided on a middle portion of the substrate 100. The exhaust portion 200 is provided with a plurality of exhaust holes 212, and an area between two adjacent adhesive injection tracks 500 corresponds to at least one of the exhaust holes 212.

The box 600 may be a metal box or a non-metal box. The box 600 is provided with an opening, and the substrate 100 is configured to cover the opening of the box 600, so as to seal the box 600. The substrate 100 may be a metal substrate or a non-metal substrate. For example, the substrate 100 may be of a flat plate structure, and the shape of the substrate 100 may be polygonal. It should be noted that, the specific shape of the substrate 100 may be determined according to the shape of the box 600, that is, the substrate 100 may be flat or may not be flat.

As described above, the box 600 and the substrate 100 together form the accommodating cavity 61. The accommodating cavity 61 is configured to accommodate the plurality of cells 400. The plurality of cells 400 are arranged in an array within the accommodating cavity 61. Specifically, the box 600 is provided with the plurality of adhesive injection tracks 500 in the accommodating cavity 61, so as to define a plurality of accommodating regions 611 in the accommodating cavity 61. Therefore, the plurality of cells 400 may be closely arranged in multiple rows and multiple columns within the plurality of accommodating regions 611 of the accommodating cavity 61. A top end of the cell 400 is arranged adjacent to the substrate 100, and a bottom end of the cell 400 is arranged adjacent to a bottom of the box 600. The top end of the cell 400 can be an electrode output terminal. For example, the cell 400 is a cylindrical lithium-ion cell.

As described above, the accommodating cavity 61 is also configured to accommodate foam adhesive. For example, a foaming machine can be used to output foam adhesive. After the plurality of cells 400 are placed in the accommodating cavity 61, the foam adhesive can be injected, through the foaming machine, into the accommodating cavity 61 along the preset adhesive injection tracks 500, so as to form the foam adhesive along the preset adhesive injection tracks 500 in the accommodating cavity 61, fix the cells 400 in the accommodating cavity 61, and divide the plurality of cells 400 into multiple groups.

For example, the preset adhesive injection tracks 500 may be a plurality of segments of one adhesive injection track, and the foam adhesive is formed along the plurality of adhesive injection tracks 500 in the accommodating cavity 61. The foam adhesive freshly injected into the accommodating cavity 61 is in a liquid state and has fluidity. After the foam adhesive in corresponding adhesive injection track 500 comes into contact with air, the foam adhesive expands, so that the foam adhesive can fill up the gaps among the cells 400, thereby filling up the remaining space in the accommodating cavity 61. It should be noted that, when the time for which the foam adhesive comes into contact with air reaches a preset value, the foam adhesive will solidify to form a solid foam adhesive, thereby fixing each cell 400 in the accommodating cavity 61, preventing the cells 400 from shaking, preventing the cells 400 from being affected by dust, temperature and humidity, reducing the risk of moisture, corrosion and short circuit of the battery, improving the safety of the battery pack 1, and also helping with shock absorption and extending battery life.

The exhaust portion 200 and the substrate 100 are an integrally formed structure. The exhaust portion 200 may be in a long strip shape. For example, an extension direction of the exhaust portion 200 intersects with an extension direction of each adhesive injection track 500. For example, the extension direction of the exhaust portion 200 may be perpendicular to the extension direction of each adhesive injection track 500. The exhaust portion 200 is provided with a plurality of exhaust holes 212, and the plurality of exhaust holes 212 are spaced apart from each other.

By setting the exhaust portion 200 on the middle portion of the substrate 100, and setting the area between two adjacent adhesive injection tracks 500 to correspond to at least one exhaust hole 212, when fully encapsulating and foaming the battery pack 1, the foam adhesive merges towards the middle area between two adjacent adhesive injection tracks 500 from the two adjacent adhesive injection tracks 500, bubbles are gradually squeezed to the middle area, and gas in the bubbles can be effectively discharged through the exhaust holes 212 corresponding to the area between the two adjacent adhesive injection tracks 500, thereby avoiding vacuoles caused by foaming.

In some embodiments, four adhesive injection tracks 500 are provided in the box 600, every four columns of the cells 400 are separated by the adhesive injection tracks 500, and the middle area of two adjacent adhesive injection tracks 500 corresponds to at least one exhaust hole 212. When fully encapsulating and foaming each cell 400 in the box 600, the foam adhesive merges towards the middle area of two adjacent adhesive injection tracks 500 from the two adjacent adhesive injection tracks 500, and the bubbles are gradually squeezed to the middle area between the two adjacent adhesive injection tracks 500, thus, gas in the bubbles and the accommodating cavity 61 can be effectively discharged through the exhaust holes 212 corresponding to the area between the two adjacent adhesive injection tracks 500, thereby preventing bubbles from remaining in the box 600.

It should be noted that, in an open state of the substrate 100, the foam adhesive can be injected into the box 600 through the foaming machine, and after the adhesive injection is completed, the substrate 100 is covered on the opening of the box 600 to seal the box 600. After foaming and expanding in the box 600, the foam adhesive gradually filling the space of the accommodation cavity 61 of the box 600, and gas in the bubbles and the accommodating cavity 61 is discharged through the exhaust holes 212 provided in the exhaust portion 200, thereby effectively discharging the bubbles generated in the box 600 during a foaming process.

In the embodiments of the present disclosure, the box 600 is covered by the substrate 100, the substrate 100 and the box 600 together form the accommodating cavity 61, and the accommodating cavity 61 is configured to accommodate the plurality of cells 400 and the foam adhesive arranged along the plurality of adhesive injection tracks 500. The exhaust portion 200 is provided on the middle portion of the substrate 100. The exhaust portion 200 is provided with the plurality of exhaust holes 212, and the area between two adjacent adhesive injection tracks 500 is set to correspond to at least one exhaust hole 212, so as to discharge gas timely during the fully encapsulating and foaming process of the battery pack 1, thereby preventing bubbles from remaining in the cover structure 10. Specifically, when fully encapsulating and foaming are performed, the foam adhesive merges towards the middle area between two adjacent adhesive injection tracks 500 from the two adjacent adhesive injection tracks 500, and bubbles generated in the box 600 during a foaming process are gradually squeezed to the middle area, and then can be effectively discharged through the exhaust holes 212 corresponding to the area between the two adjacent adhesive injection tracks 500, so as to avoid vacuoles caused by foaming, and improve the adhesive performance of the cover structure 10 and the overall strength of the foam adhesive, thereby enhancing the overall strength of the battery pack 1.

In some embodiments, as shown in FIG. 2, the exhaust portion 200 includes a plurality of exhaust regions 210 arranged at intervals. Each exhaust region 210 is provided with a plurality of exhaust holes 212, and the area between every two adjacent adhesive injection tracks 500 corresponds to at least one of the exhaust holes 212 in each of the exhaust regions 210.

The exhaust region 210 is in a long strip shape. For example, the exhaust region 200 may include four exhaust regions 210 arranged at intervals. For example, the four exhaust regions 210 may be arranged symmetrically based on a central axis X (as shown in FIG. 1) of the substrate 100, and the central axis X of the substrate 100 is perpendicular to the adhesive injection track 500.

The exhaust region 210 is provided with the plurality of exhaust holes 212, and the number of the exhaust holes 212 on the exhaust region 210 may be determined according to the number of the cells 400 in the accommodating cavity 61. For example, every four columns of the cells 400 may be separated by the adhesive injection tracks 500. That is, every four columns of the cells 400 correspond to at least one exhaust hole 212 of each of the exhaust regions 210.

By setting the exhaust portion 200 on the middle portion of the substrate 100, and setting the area between every two adjacent adhesive injection tracks 500 to correspond to at least one exhaust hole 212 of each of the exhaust regions 210, when fully encapsulating and foaming the battery pack 1, the foam adhesive merges towards the middle area between two adjacent adhesive injection tracks 500 from the two adjacent adhesive injection tracks 500, and bubbles are squeezed towards the middle area of the two adjacent adhesive injection tracks 500. Thus, when the bubbles approach the exhaust holes 212, the bubbles can be discharged through the exhaust holes 212. In this way, gas in the bubbles and the accommodating cavity 61 can be effectively discharged through the exhaust holes 212 corresponding to the area between two adjacent adhesive injection tracks 500, thereby avoiding vacuoles caused by foaming. By providing a plurality of exhaust holes 212 at intervals along the extension direction of the adhesive injection tracks 500 between two adjacent adhesive injection tracks 500, due to the displacement of the foam adhesive during the foaming process, bubbles can be discharged from adjacent exhaust holes 212, thereby avoiding bubbles not being discharged in time, thereby effectively improving the discharging efficiency of the bubbles and ensuring that the bubbles can be completely discharged.

For example, the number of the exhaust regions 210 can be determined based on a size of the accommodating cavity 61 of the box 600. For example, for an accommodating cavity of a box with a larger size, the corresponding adhesive injection tracks are longer, and the exhaust portion 200 may be provided with a plurality of exhaust regions 210 arranged at intervals, so that the area between two adjacent adhesive injection tracks 500 corresponds to a plurality of exhaust holes 212 arranged at intervals along the extension direction of the adhesive injection tracks 500. Due to the displacement of the foam adhesive during the foaming process, bubbles can be discharged from adjacent exhaust holes 212, thereby avoiding bubble congestion and failure to discharge in time, thereby effectively improving the discharging efficiency of the bubbles and ensuring that the bubbles can be completely discharged. For an accommodating cavity of a box with a smaller size, the corresponding adhesive injection tracks are shorter, and the exhaust portion 200 may be provided with one exhaust region 210 arranged in the middle portion of the substrate 100. Bubbles are squeezed towards the middle area between two adjacent adhesive injection tracks 500. When the bubbles approach the exhaust holes 212, the bubbles can be discharged through the exhaust holes 212, thereby avoiding vacuoles caused by foaming.

It should be noted that, since the exhaust holes 212 are communicated with the external environment, the sizes of the exhaust holes 212 should not be designed too large or too small. If the exhaust holes 212 is designed too large, it will cause excessive foam adhesive to be discharged from the exhaust holes 212 to the outside, thus affecting the appearance of the product. If the exhaust holes 212 is designed too small, it is easy to cause blockage of the exhaust holes 212, resulting in incomplete discharge of the bubbles inside the box 600.

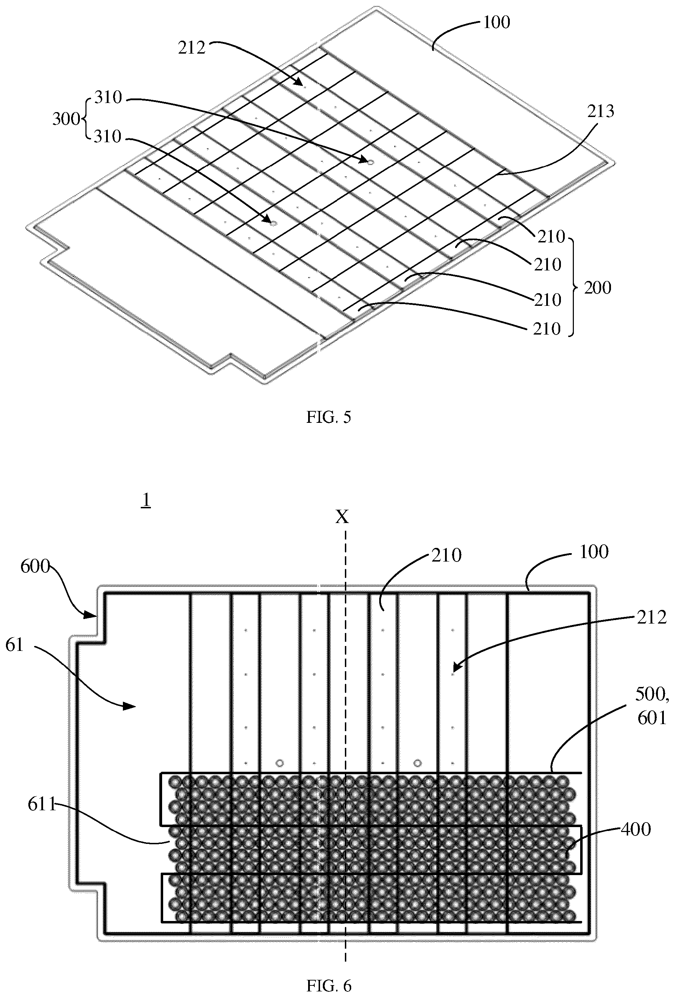

In some embodiments, the box 600 is provided with a plurality of first marking lines 601 corresponding to the adhesive injection tracks 500, and as shown in FIG. 5, the substrate 100 is provided with a plurality of second marking lines 213 corresponding one-to-one with the plurality of first marking lines 601. The area between every two adjacent second marking lines 213 is provided with at least one of the exhaust holes 212 of each of the exhaust regions 210.

In some embodiments, at least one outer side surface of the box 600 is provided with the plurality of first marking lines corresponding one-to-one with the plurality of adhesive injection tracks 500. In this way, when it is necessary to inject adhesive into the box 600, foam adhesive can be injected into the box 600 based on the first marking lines, so that foam adhesive arranged along the preset adhesive injection tracks 500 is formed in the box 600. In another embodiments, as shown in FIG. 6, the plurality of first marking lines 601 may be provided on an outer surface of a bottom of the box 600, and spatially overlap one-to-one with the plurality of adhesive injection tracks 500 along a height direction of the box 600.

The substrate 100 is provided with a plurality of second marking lines 213 arranged in one-to-one correspondence with the plurality of first marking lines. For example, when the substrate 100 covers the box 600, one end of the second marking line 213 can be aligned with one end of the corresponding first marking line. In addition, the plurality of second marking lines 213 further correspond one-to-one with the plurality of adhesive injection tracks 500, when the substrate 100 covers the box 600, the plurality of second marking lines 213 overlap one-to-one with the plurality of adhesive injection tracks 500. It should be noted that, the second marking line 213 may be provided on the substrate 100 by means of silk-screening or engraving, and the first marking line may be provided on the box 600 by means of silk-screening or engraving.

By providing the first marking lines on the box 600, it is convenient for users to inject foam adhesive into the box 600 based on the preset adhesive injection tracks 500. By providing the second marking lines 213 on the substrate 100, it is convenient to match and position the second marking line 213 with a corresponding adhesive injection track 500. When fully encapsulating and foaming the battery pack 1, the foam adhesive merges towards the middle area between two adjacent second marking lines 213 from the two adjacent second marking lines 213, the bubbles are squeezed towards the middle area between the two adjacent second marking lines, and thus when the bubbles approach the exhaust holes 212, the bubbles can be discharged through the exhaust holes 212, thereby avoiding vacuoles caused by foaming.

In some embodiments, the distance between the exhaust region 210 and the bottom of the box 600 is greater than the distance between the substrate 100 and the bottom of the box 600.

For example, the exhaust region 210 may protrude from the substrate 100, so that the distance between the exhaust region 210 and the bottom of the box 600 is greater than the distance between the substrate 100 and the bottom of the box 600. That is, the height of the exhaust region 210 relative to the box 600 is greater than the height of the substrate 100 relative to the box 600, so that the exhaust holes 212 of the exhaust region 210 are located at the highest position of the substrate 100. When fully encapsulating and foaming the battery pack 1, the foam adhesive merges towards the middle area between two adjacent adhesive injection tracks 500 from the two adjacent adhesive injection tracks 500, the bubbles are gradually squeezed to the middle area. In this way, by setting the exhaust holes 212 corresponding to the area between two adjacent adhesive injection tracks 500, and on the basis that the exhaust holes 212 are located at the highest position of the substrate 100, so that the bubbles generated in the box during a foaming process can be effectively discharged, thereby avoiding vacuoles caused by foaming, improving the adhesive performance of the cover structure 100 and the overall strength of the foam adhesive, and then enhancing the overall strength of the battery pack 1.

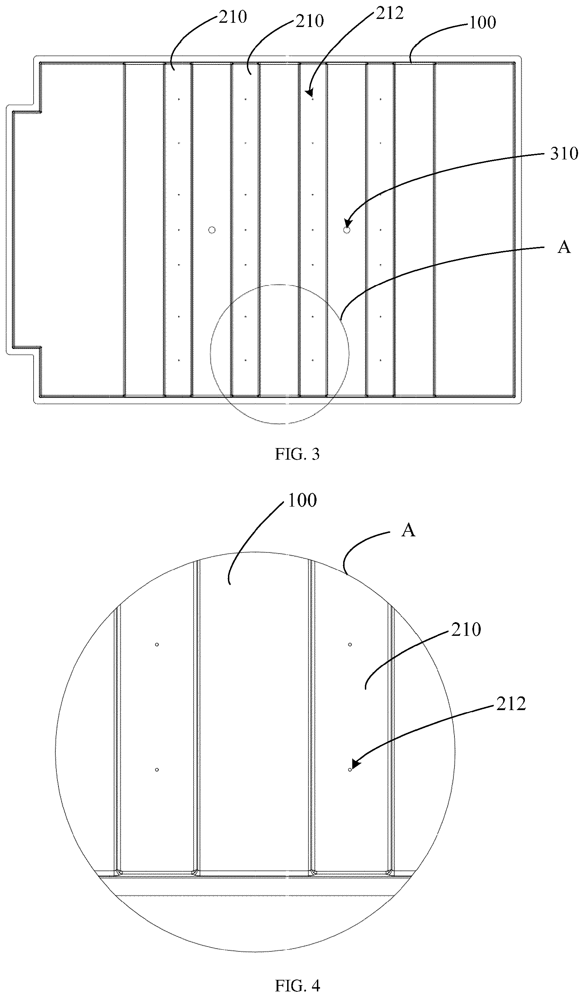

In some embodiments, as shown in FIGS. 3 and 4, the plurality of exhaust holes 212 in the same exhaust region 210 are arranged at equal intervals.

For example, if eight adhesive injection tracks 500 are arranged in the accommodating cavity 61, then each of the exhaust region 210 is provided with seven exhaust holes 212, and there is one exhaust hole 212 of each exhaust region 210 corresponding to the area between two adjacent adhesive injection tracks 500. For example, every four columns of the cells 400 are separated by theadhesive injection tracks 500, by arranging the plurality of exhaust holes 212 of the same exhaust region 210 at equal intervals, each of the exhaust holes 212 of the exhaust region 210 can correspond to the middle positions between two adjacent adhesive injection tracks 500. When fully encapsulating and foaming the plurality of cells 400 in the box 600, the foam adhesive merges towards the middle area between two adjacent adhesive injection tracks 500 from the two adjacent adhesive injection tracks 500, and the bubbles are gradually squeezed nto the middle area between the two adjacent adhesive injection tracks 500. In this way, gas in the bubbles and the accommodating cavity 61 can be effectively discharged through the exhaust holes 212 corresponding to the area between two adjacent adhesive injection tracks 500, thereby preventing the bubbles from remaining in the box 600, and then improving the adhesive performance of the cover structure 10 and the overall strength of the foam adhesive.

For example, as shown in FIG. 1, the plurality of exhaust holes 212 in the same exhaust region 210 are arranged along the same central axis X, and the central axis X is perpendicular to the adhesive injection track 500.

For example, the adhesive injection track 500 may be in a straight line shape, and the plurality of adhesive injection tracks 500 are sequentially communicate (as shown in FIG. 6). The plurality of exhaust holes 212 in the same exhaust region 210 have the same size and shape. For example, the exhaust holes 212 may be circular holes. The center axis X may be a center long axis of the exhaust region 210. The center axis X overlaps a connecting line of center points of the plurality of exhaust holes 212.

The plurality of exhaust holes 212 in the same exhaust region 210 are arranged along the same central axis X, and the central axis X is perpendicular to the adhesive injection track 500. Each exhaust hole 212 corresponds to the middle position between the two adjacent adhesive injection tracks 500. When fully encapsulating and foaming the cells in the box, the foam adhesive merges towards the middle area between two adjacent adhesive injection tracks 500 from the two adjacent adhesive injection tracks 500, and the bubbles are gradually squeezed to the middle area of the two adjacent adhesive injection track 500. In this way, gas in the bubbles and the accommodating cavity 61 can be effectively discharged through the exhaust holes 212 corresponding to the area between the two adjacent adhesive injection tracks 500, thereby preventing the bubbles from remaining in the box 600, so as to improve the adhesive performance of the cover structure 10 and the overall strength of the foam adhesive. In addition, a simplified design of the cover structure 10 is realized, inner cross beams of the box 600 can be reduced, the wall thickness of the box is thinned, the number of corresponding fasteners can also be reduced, the weight of the battery pack 1 is reduced, the energy density of the battery pack 1 can also be improved, and the costs are reduced.

In one embodiment, as shown in FIGS. 3 and 4, the width of the exhaust region 210 is less than the spacing distance between two adjacent exhaust regions 210.

For example, the exhaust region 210 is provided as a convex structure, so that the relative height of the exhaust region 210 is greater than the relative height of the substrate 100. In addition, the width of the exhaust region 210 is set to be smaller than the distance between two adjacent exhaust regions 210, thus, when fully encapsulated and foamed is performed in the box 600, the foam adhesive merges towards the middle area between two adjacent adhesive injection tracks 500 from the two adjacent adhesive injection tracks 500, so that the bubbles are gradually squeezed to the exhaust region 210, and then the bubbles are discharged through the exhaust holes 212 in the exhaust region 210. Thus, the bubbles generated in the box 600 during a foaming process can be effectively discharged through the exhaust holes 212 corresponding to the area between two adjacent adhesive injection tracks 500, thereby avoiding vacuoles caused by foaming, improving the adhesive performance of the cover structure and the overall strength of the foam adhesive, and then enhancing the overall strength of the battery pack 1.

In one embodiment, the aperture of the exhaust hole 212 is between 3 mm and 6 mm (millimeters). The aperture of the exhaust hole 212 refers to the diameter of the exhaust hole 212. For example, the aperture of the exhaust hole 212 may be 3 mm, 5 mm, or 6 mm.

By setting the diameter of the exhaust holes 212 between 3 mm and 6 mm, when the plurality of cells 400 in the box are fully encapsulated and foamed, the foam adhesive merges towards the middle area between two adjacent adhesive injection tracks 500 from the two adjacent adhesive injection tracks 500, and bubbles are slowly squeezed to the middle area of the two adjacent adhesive injection tracks 500. In this way, the bubbles generated in the box during a foaming process can be effectively discharged through the exhaust holes 212 corresponding to the area between two adjacent adhesive injection tracks 500, thereby avoiding blockage of the exhaust holes 212 caused by the exhaust holes 212 being too small and unable to discharge the bubbles in time, and also avoiding the discharge of foam adhesive caused by the exhaust holes 212 being too large, effectively improving the adhesive performance of the cover structure 10 and the overall strength of the foam adhesive, and then enhancing the overall strength of the battery pack 1.

In some embodiments, as shown in FIGS. 2 and 3, the cover structure 10 further includes a fixing portion 300. The fixing portion 300 is provided on the substrate 100, and the fixing portion 300 is provided with a plurality of fixing holes 310.

The fixing portion 300 may be provided with two fixing holes 310 arranged at intervals. For example, a fastening member (such as a bolt) may penetrate through the fixing holes 310, to lock the substrate 100 on the box 600, so that the substrate 100 is installed on the box 600, thereby simplifying the structure of the cover structure 10, reducing inner cross beams of the box 600, eliminating the need for excessive fasteners, reducing the weight of the battery pack 1, improving the energy density of the battery pack 1, and reducing the cost.

In the embodiments of the present disclosure, the box is covered by the substrate, the substrate and the box together form the accommodating cavity, and the accommodating cavity is configured to accommodate the plurality of cells and the foam adhesive arranged along the plurality of adhesive injection tracks. The exhaust portion is provided on the middle portion of the substrate. The exhaust portion is provided with the plurality of exhaust holes, and the area between two adjacent adhesive injection tracks is set to correspond to at least one exhaust hole, so as to discharge gas timely during the fully encapsulating and foaming process of the battery pack, thereby preventing bubbles from remaining in the cover structure. Specifically, when fully encapsulating and foaming are performed, the foam adhesive merges towards the middle area between the two adjacent adhesive injection tracks from the two adjacent adhesive injection tracks, and bubbles generated in the box during a foaming process are gradually squeezed towards the middle area, and then can be effectively discharged through the exhaust holes corresponding to the area between the two adjacent adhesive injection tracks, so as to avoid vacuoles caused by foaming, and improve the adhesive performance of the cover structure and the overall strength of the foam adhesive, thereby enhancing the overall strength of the battery pack.

It should be noted that the battery pack may also include components such as output electrodes. A specific battery pack may include more components than those described in the embodiments of the present disclosure, or combine some components, or have different component arrangements.

## Claims

1. A battery pack (1) comprising a plurality of cells (400), a box (600) and a cover structure (10); the cover structure (10) comprising:
a substrate (100) configured to cover the box (600); wherein the substrate (100) and the box (600) together form an accommodating cavity (61), and the accommodating cavity (61) is configured to accommodate the plurality of cells (400) and foam adhesive; and
an exhaust portion (200) provided on a middle portion of the substrate (100);
**characterized in that**,
the exhaust portion (200) is provided with a plurality of exhaust holes (212);
the box (600) comprises a plurality of adhesive injection tracks (500) at its bottom within the accommodating cavity (61), wherein the foam adhesive is arranged along the plurality of adhesive injection tracks (500);
the exhaust hole (212) is configured to discharge bubbles from the accommodating cavity (61) during an injection of the foam adhesive along the adhesive injection tracks (500) to fully encapsulate and foam the battery pack (1); wherein an area between two adjacent adhesive injection tracks (500) corresponds to at least one of the exhaust holes (212).

2. The battery pack (1) according to claim 1, wherein the exhaust portion (200) comprises a plurality of exhaust regions (210) arranged at intervals; wherein each exhaust region (210) is provided with a plurality of exhaust holes (212), and the area between every two adjacent adhesive injection tracks (500) corresponds to at least one of the exhaust holes (212) in each of the exhaust regions (210).

3. The battery pack (1) according to claim 2, wherein a distance between the exhaust region (210) and a bottom of the box (600) is greater than a distance between the substrate (100) and the bottom of the box (600).

4. The battery pack (1) according to claim 2, wherein the plurality of exhaust holes (212) in the same exhaust region (210) are arranged at equal intervals.

5. The battery pack (1) according to claim 4, wherein the plurality of exhaust holes (212) in the same exhaust region (210) are arranged along a central axis of the substrate (100); wherein the central axis is perpendicular to the adhesive injection track (500).

6. The battery pack (1) according to claim 4, wherein a width of the exhaust region (210) is less than a spacing distance between two adjacent exhaust regions (210).

7. The battery pack (1) according to any one of claims 1 to 6, wherein the exhaust hole (212) is a circular hole.

8. The battery pack (1) according to claim 7, wherein an circular of the exhaust hole (212) is between 3 mm and 6 mm.

9. The battery pack (1) according to any one of claims 2 to 6, wherein the exhaust region (210) is in a long strip shape, and an extension direction of the exhaust portion (200) intersects with an extension direction of the adhesive injection track (500).

10. The battery pack (1) according to claim 9, wherein the box (600) is provided with a plurality of first marking lines (601) corresponding one-to-one with the adhesive injection tracks (500); the substrate (100) is provided with a plurality of second marking lines (213) corresponding one-to-one with the first marking lines (601); wherein the area between every two adjacent second marking lines (213) is provided with at least one of the exhaust holes (212) of each of the exhaust regions (210).

11. The battery pack (1) according to claim 10, wherein the plurality of second marking lines (213) overlap one-to-one with the plurality of adhesive injection tracks (500) when the substrate (100) covers the box (600).

12. The battery pack (1) according to claim 3, wherein the exhaust region is protrude from the substrate.

13. The battery pack (1) according to any one of claims 1 to 12, further comprising a fixing portion (300), wherein the fixing portion (300) is provided on the substrate (100); the fixing portion (300) is provided with a plurality of fixing holes (310) for locking the substrate (100) on the box (600).

14. The battery pack (1) according to claim 1, wherein the plurality of adhesive injection tracks (500) are sequentially communicate.

## Patentansprüche

1. Batteriepack (1) umfassend eine Mehrzahl von Zellen (400), ein Gehäuse (600) und eine Abdeckstruktur (10), wobei die Abdeckstruktur (10) umfasst:
ein Substrat (100), das dazu konfiguriert ist, das Gehäuse (600) abzudecken,
wobei das Substrat (100) und das Gehäuse (600) zusammen einen Aufnahmeraum (61) bilden und der Aufnahmeraum (61) dazu konfiguriert ist, die Mehrzahl von Zellen (400) und einen Schaumbinder aufzunehmen; und
einen Abgasabschnitt (200), der an einem mittleren Abschnitt des Substrats (100) vorgesehen ist;
**dadurch gekennzeichnet, dass**
der Abgasabschnitt (200) mit einer Mehrzahl von Abgasöffnungen (212) versehen ist;
das Gehäuse (600) an seinem Boden innerhalb des Aufnahmeraums (61) eine Mehrzahl von Klebstoffeinspritzbahnen (500) umfasst, wobei der Schaumbinder entlang der Mehrzahl von Klebstoffeinspritzbahnen (500) angeordnet ist;
die Abgasöffnung (212) dazu konfiguriert ist, während einer Einspritzung des Schaumbinders entlang der Klebstoffeinspritzbahnen (500) Blasen aus dem Aufnahmeraum (61) abzuführen, um das Batteriepack (1) vollständig durch Aufschäumen des Schaumbinders zu kapseln;
wobei ein Bereich zwischen zwei benachbarten Klebstoffeinspritzbahnen (500) mindestens einer der Abgasöffnungen (212) entspricht.

2. Das Batteriepack (1) gemäß Anspruch 1, wobei der Abgasabschnitt (200) eine Mehrzahl von Abgasbereichen (210) umfasst, die in Abständen angeordnet sind; und wobei jeder Abgasbereich (210) mit einer Mehrzahl von Abgasöffnungen (212) versehen ist, und der Bereich zwischen jeweils zwei benachbarten Klebstoffeinspritzbahnen (500) mindestens einer der Abgasöffnungen (212) in jedem der Abgasbereiche (210) entspricht.

3. Das Batteriepack (1) gemäß Anspruch 2, wobei ein Abstand zwischen dem Abgasbereich (210) und einem Boden des Gehäuses (600) größer ist als ein Abstand zwischen dem Substrat (100) und dem Boden des Gehäuses (600).

4. Das Batteriepack (1) gemäß Anspruch 2, wobei die Mehrzahl der Abgasöffnungen (212) in demselben Abgasbereich (210) in gleichen Abständen angeordnet sind.

5. Das Batteriepack (1) gemäß Anspruch 4, wobei die Mehrzahl der Abgasöffnungen (212) in demselben Abgasbereich (210) entlang einer Mittelachse des Substrats (100) angeordnet sind; und wobei die Mittelachse senkrecht zu der Klebstoffeinspritzbahn (500) verläuft.

6. Das Batteriepack (1) gemäß Anspruch 4, wobei eine Breite des Abgasbereichs (210) kleiner ist als der Abstand zwischen zwei benachbarten Abgasbereichen (210).

7. Das Batteriepack (1) gemäß einem der Ansprüche 1 bis 6, wobei die Abgasöffnung (212) ein Kreisloch ist.

8. Das Batteriepack (1) gemäß Anspruch 7, wobei ein Durchmesser der Abgasöffnung (212) zwischen 3 mm und 6 mm liegt.

9. Das Batteriepack (1) gemäß einem der Ansprüche 2 bis 6, wobei der Abgasbereich (210) eine längliche Streifenform aufweist, und eine Ausdehnungsrichtung des Abgasabschnitts (200) die Ausdehnungsrichtung der Klebstoffeinspritzbahn (500) schneidet.

10. Das Batteriepack (1) gemäß Anspruch 9, wobei das Gehäuse (600) mit einer Mehrzahl von ersten Markierungslinien (601) versehen ist, die jeweils einer Klebstoffeinspritzbahn (500) entsprechen;
das Substrat (100) ist mit einer Mehrzahl von zweiten Markierungslinien (213) versehen, die jeweils den ersten Markierungslinien (601) entsprechen; und wobei der Bereich zwischen jeweils zwei benachbarten zweiten Markierungslinien (213) mindestens einer der Abgasöffnungen (212) in jedem der Abgasbereiche (210) aufweist.

11. Das Batteriepack (1) gemäß Anspruch 10, wobei die Mehrzahl der zweiten Markierungslinien (213) jeweils mit der Mehrzahl der Klebstoffeinspritzbahnen (500) überlagert ist, wenn das Substrat (100) das Gehäuse (600) abdeckt.

12. Das Batteriepack (1) gemäß Anspruch 3, wobei der Abgasbereich (210) aus dem Substrat (100) hervorsteht.

13. Das Batteriepack (1) gemäß einem der Ansprüche 1 bis 12, weiter umfassend einen Befestigungsabschnitt (300), wobei der Befestigungsabschnitt (300) auf dem Substrat (100) vorgesehen ist; und der Befestigungsabschnitt (300) ist mit einer Mehrzahl von Befestigungsbohrungen (310) versehen, um das Substrat (100) am Gehäuse (600) zu verriegeln.

14. Das Batteriepack (1) gemäß Anspruch 1, wobei die Mehrzahl der Klebstoffeinspritzbahnen (500) nacheinander miteinander verbunden sind.

## Revendications

1. Bloc-batterie (1) comprenant une pluralité de cellules (400), un boîtier (600) et une structure de couverture (10), la structure de couverture (10) comprenant :
un substrat (100) configuré pour recouvrir le boîtier (600),
dans lequel le substrat (100) et le boîtier (600) forment ensemble une cavité de logement (61), et la cavité de logement (61) est configurée pour loger la pluralité de cellules (400) et un adhésif en mousse ; et
une portion d'échappement (200) disposée sur une portion médiane du substrat (100);
**caractérisé en ce que**:
la portion d'échappement (200) est pourvue d'une pluralité de trous d'échappement (212) ;
le boîtier (600) comprend, au niveau de son fond à l'intérieur de la cavité de logement (61), une pluralité de pistes d'injection d'adhésif (500), l'adhésif en mousse étant disposé le long de la pluralité de pistes d'injection d'adhésif (500) ;
le trou d'échappement (212) est configuré pour évacuer des bulles hors de la cavité de logement (61) lors d'une injection de l'adhésif en mousse le long des pistes d'injection d'adhésif (500), afin d'encapsuler complètement le bloc-batterie (1) par moussage de l'adhésif en mousse ;
dans lequel une zone située entre deux pistes d'injection d'adhésif adjacentes (500) correspond à au moins un des trous d'échappement (212).

2. Le bloc-batterie (1) selon la revendication 1, dans lequel la portion d'échappement (200) comprend une pluralité de régions d'échappement (210) disposées à intervalles ; et dans lequel chaque région d'échappement (210) est pourvue d'une pluralité de trous d'échappement (212), et la zone située entre chaque paire de pistes d'injection d'adhésif adjacentes (500) correspond à au moins un des trous d'échappement (212) dans chacune des régions d'échappement (210).

3. Le bloc-batterie (1) selon la revendication 2, dans lequel une distance entre la région d'échappement (210) et un fond du boîtier (600) est supérieure à une distance entre le substrat (100) et le fond du boîtier (600).

4. Le bloc-batterie (1) selon la revendication 2, dans lequel la pluralité de trous d'échappement (212) dans une même région d'échappement (210) sont disposés à intervalles égaux.

5. Le bloc-batterie (1) selon la revendication 4, dans lequel la pluralité de trous d'échappement (212) dans une même région d'échappement (210) sont disposés le long d'un axe central du substrat (100) ; et dans lequel l'axe central est perpendiculaire à la piste d'injection d'adhésif (500).

6. Le bloc-batterie (1) selon la revendication 4, dans lequel une largeur de la région d'échappement (210) est inférieure à la distance d'espacement entre deux régions d'échappement adjacentes (210).

7. Le bloc-batterie (1) selon l'une quelconque des revendications 1 à 6, dans lequel le trou d'échappement (212) est un trou circulaire.

8. Le bloc-batterie (1) selon la revendication 7, dans lequel un diamètre du trou d'échappement (212) est compris entre 3 mm et 6 mm.

9. Le bloc-batterie (1) selon l'une quelconque des revendications 2 à 6, dans lequel la région d'échappement (210) a une forme de bande longue, et une direction d'extension de la portion d'échappement (200) intersecte une direction d'extension de la piste d'injection d'adhésif (500).

10. Le bloc-batterie (1) selon la revendication 9, dans lequel le boîtier (600) est pourvu d'une pluralité de premières lignes de repère (601) correspondant une à une aux pistes d'injection d'adhésif (500) ; le substrat (100) est pourvu d'une pluralité de secondes lignes de repère (213) correspondant une à une aux premières lignes de repère (601) ; et la zone située entre chaque paire de secondes lignes de repère adjacentes (213) est pourvue d'au moins un des trous d'échappement (212) de chacune des régions d'échappement (210).

11. Le bloc-batterie (1) selon la revendication 10, dans lequel la pluralité de secondes lignes de repère (213) se superpose une à une à la pluralité de pistes d'injection d'adhésif (500) lorsque le substrat (100) recouvre le boîtier (600).

12. Le bloc-batterie (1) selon la revendication 3, dans lequel la région d'échappement (210) dépasse du substrat (100).

13. Le bloc-batterie (1) selon l'une quelconque des revendications 1 à 12, comprenant en outre une portion de fixation (300), dans lequel la portion de fixation (300) est disposée sur le substrat (100) ; et la portion de fixation (300) est pourvue d'une pluralité de trous de fixation (310) destinés à verrouiller le substrat (100) sur le boîtier (600).

14. Le bloc-batterie (1) selon la revendication 1, dans lequel la pluralité de pistes d'injection d'adhésif (500) sont reliées de manière séquentielle.
